# EUROPEAN PATENT APPLICATION

(11) **EP 1 627 941 A1**
(43) Date of publication of application: **22.02.2006**
(21) Application number: 04077330.1
(22) Date of filing: 17.08.2004
(51) Int. Cl.: D01D 5/247, D01D 5/34, D01D 5/06, D01D 5/24, D01F 1/10

(54) **Functional porous multilayer fibre and its preparation**

(71) Applicant: Mosaic Systems B.V., 4815 PL Breda (NL)
(72) Inventor: Koops, Geert Hendrik, 8015 AP Zwolle (NL); Van Wijk, Willem Dederik, 4433 AB Hoedekenskerke (NL); Wessling, Matthias, 7513 EK Enschede (NL)
(74) Representative: van Westenbrugge, Andries

(57) **Abstract**

The invention relates to a hollow or solid fibre having multiple porous layers concentrically arranged, and wherein at least one of the layers comprises functionalized or active particles that are well accessible and maintain their function after preparation. The layer containing high loads of particles can be either the outer or the inner layer. The main function of the other porous layer is to provide mechanical stability to the fibre. It can further act as a sieve and prevent unwanted compounds or species to come in contact with the functionalized particulate matter. Where it is the inner layer, the second layer can advantageously be a biocompatible material. With the second being the outer layer it is now possible to reach a particle content of 100 wt% in the inner layer. These fibres comprising high densities of functionalized particulate matter and of still sufficient mechanical strength can be used for (selective) adsorption, conversion, isolation or purification of compounds from a mixture of compounds, in particular from a fermentation broth, tissue broth, plant broth, cell broth or blood.

## Description

### TECHNICAL FIELD OF THE INVENTION

The invention relates to a hollow or solid fibre having multiple porous layers concentrically arranged, and wherein one of the layers comprises functionalized or active particles that are well accessible and maintain their function after preparation. The invention also relates to the preparation of such a fibre and to the use of the fibre for (selective) adsorption, conversion, isolation or purification of compounds from a mixture of compounds, in particular from a fermentation broth, tissue broth, plant broth, cell broth or blood.

### BACKGROUND OF THE INVENTION

In the art methods are known to prepare porous fibres involving the use of particulate material, mostly requiring an additional process step to introduce the desired porosity to the fibre. After the step of preparing the fibre comprising particulate material either particulate material is removed from the non-porous fibre or the non-porous fibre is stretched resulting in porous fibres. Only in the latter case a microporous fibre comprising particles having a certain (sorptive) function is obtained.

Disadvantages related herewith are that these processes involve additional process steps after the formation of the fibre to come to a final product and that, depending on the actual process steps that need to be taken to come to the final product, suitable starting materials have to be selected with properties that can sustain the conditions of the additional process steps. Obviously such a requirement puts limitations on the polymeric material and on the type of particulate material that can be used. The degree of loading of particulate material will be limited by the force required to reach sufficient stretching of the matrix material to achieve the desired porosity. By stretching of the particle comprising material the particulate material can drop out of the porous structure to be formed. In processes which involve melt extrusion only particulate material that can sustain temperatures required to melt the matrix polymer can be applied. It is not uncommon that these temperatures are well above 200 °C.

DD-A-233,385 discloses a method for the preparation of porous fibres, comprising a one-step phase inversion or so-called wet-spinning process. Immediately after extrusion the fibre enters a coagulation bath. Particles are applied to maintain porosity during drying at elevated temperatures; the accessibility and functionality of the particles are less critical therein. It is stated that the properties and behavior of the end-product are essentially determined by the chemical structure of the polymer used.

Drawback of a method according to DD A 233,385 is that direct spinning in a coagulation bath with less than 60 wt.% solvent results in rather dense exterior surfaces and limited particle accessibility. However, an increase in the amount of solvent results in difficulties of controlling the spinning process; due to delayed demixing of the nascent fibre solidification takes too long.

The aforementioned problems are solved using the method according to WO-A-2004/003268 for the preparation of porous polymeric fibres comprising functionalized or active particles that are still accessible and active after preparation.

However, the fibre disclosed therein only has a limited degree of loading of particulate material. It is reported that the mechanical weakness of a fibre and its limited processability could partly be overcome by coextruding a thread, wire or yam, and that a particle content of 75 wt% still yields fibres with sufficient mechanical strength. For many applications a mechanically stable fibre with maximum functionality is desirable; in those cases it would be favorable to increase the degree of loading to higher numbers, possibly even 100 % which obviously can not be reached using the method of WO-A-2004/003268.

### SUMMARY OF THE INVENTION

It is an object of the invention to provide a fibre having a first porous layer and an adjacent second porous layer concentrically arranged therewith, said first porous layer comprising particulate material, said second porous layer comprising a polymeric material, and wherein the pores of the layers are at least permeable to fluid.

It is found that coextrusion of a second porous layer of polymeric material can yield functionalized fibres with a much larger particle content than those disclosed in the art, without being troubled by mechanical instabilities. The benefit of the additional porous layer over the application of a thread or yam is that the geometry of the fibre is not limited to one in which the functionalized particles are on the outside. Due to the presence of the stability-providing second layer a higher particulate content can be reached, and moreover, a fibre according to the invention with a certain overall particle density, calculated on the basis of the total weight of the fibre, has an improved mechanical stability over one-layer fibres having the same particle density.

According to the invention the second layer can be either the inner or the outer layer. In the case of the second layer being the shell layer, due to the permeability of the second layer for fluids and gases, the core containing the particles is still accessible and the particles maintain their functionality. In fact, the type of polymer and the porosity of the second layer can then advantageously be fine-tuned such that it is possible to use the outer layer as a sieve for species that are unwanted in the core structure and/or to match the compatibility of the fibre to the conditions of the application. Furthermore, the enhanced mechanical stability brought about by the second layer as the shell layer can yield a fibre having maximum functionality inside.

It is a further object of the invention to provide a method for the preparation of such a fibre, wherein the method comprises a coextrusion step using a spinning head with at least two concentrically arranged outlet openings, wherein a stream (A) containing particulate material and a stream (B) of polymeric material in a solvent for the polymeric material are being fed separately and simultaneously through two adjacent outlet openings, after which the two streams are subjected to a phase inversion step.

### BRIEF DESCRIPTION OF THE FIGURES

Figure 1 is a schematic representation of a cross section of a porous fibre of the invention having an inner porous polymer layer 2 and an outer porous layer 1 of a polymeric matrix with particulate material entrapped therein.
Figure 2 is a schematic representation of a cross section of a porous fibre of the invention having an inner porous layer 1 of a polymeric matrix with particulate material entrapped therein, and an outer porous polymer layer 2.
Figure 3 is a schematic representation of a cross section of a porous fibre similar to that of figure 2, with this difference that the inner porous layer 1 consists of 100 wt% particulate material.
Figure 4 is a schematic representation of a cross section of a porous fibre having a hollow core 4, and a porous layer 1 of a polymeric matrix with particulate material sandwiched between a second and third porous layer (2 and 3) of polymeric material.
Figure 5 is a 100x magnification of the cross section of an experimentally prepared fibre showing an inner porous layer of a PEG/polyethersulfon matrix with 40 wt% (dry) of Sepharose particulate material of 34 µm entrapped therein, and an outer porous PEG/polyethersulfon layer.
Figure 6A shows a 1000x magnification of a cross section of the inner layer of the co-extruded double layer fibre shown in figure 5.
Figure 6B shows a 10,000 magnification of a cross section of the outer layer of the fibre shown in figure 5.
Figure 7 shows a cross section of an experimentally prepared fibre having only Sepharose particulate material on the inside, surrounded by a porous outer PEG/polyethersulfon layer.

### DETAILED DESCRIPTION OF THE INVENTION

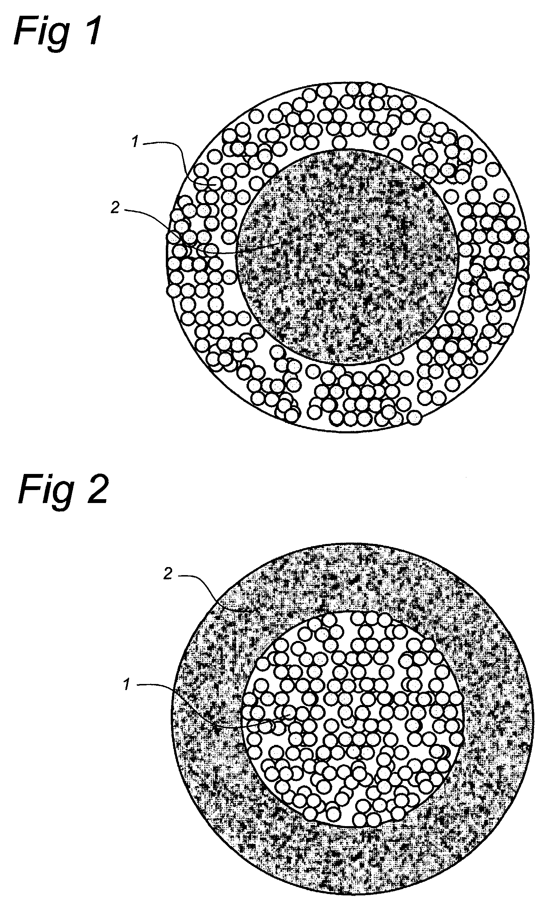

Accordingly, in one aspect of the invention the fibre comprises a first porous layer and a second porous layer. For the purpose of the invention either layer can be the outer layer. If the first porous layer is the outer layer, a structure is obtained as shown in figure 1. For those cases where the second porous layer is the outer layer, a cross section of the fibre resembles that of figure 2. In either case the second porous layer provides mechanical stability to the fibre.

If the second porous layer is the outer layer, it is preferred that the first porous layer comprises 0 - 95 wt% of a polymeric matrix and 100 - 5 wt% of the particulate material entrapped therein, calculated on the total weight of the layer. Thus, in one embodiment of the invention the porous fibre has maximum loading of particulate material, meaning that the first porous layer comprises 100 % particulate material of the total weight of the layer. The high particulate matter content of the fibre core would be impossible without the polymeric shell layer. More preferably the inner first porous layer comprises 5 - 95 wt% of a polymeric matrix and between 95 and 5 wt% of particulate material, and most preferably 5 - 50 wt% of polymeric material and 95 - 50 wt% of particulate material. These numbers are based on the dry weight of the layer.

If however the first porous layer is the outer layer, it preferably comprises 5 - 95 wt% of a polymeric matrix and 95 - 5 wt% of the particulate material entrapped therein, calculated on the total dry weight of the first porous layer. It is even more preferred that the fibre of the invention comprises an outer first porous layer that contains 5 - 50 wt% of a polymeric matrix and 95 - 50 wt% of particulate material.

In the aspect of the invention where the first porous layer comprises a polymeric matrix, it may be a polymer including elastomers, a copolymer, mixture of polymers, mixture of copolymers or a mixtures of polymers and copolymers. Preferred polymeric materials are polyethersulfone, polysulfone, polyetherimide, polyimide, polyacrylonitrile, polyethylene-co-vinylalcohol, polyvinylidenefluoride and cellulose esters. However, the invention is not limited to those polymeric materials and other suitable materials may be apparent to the skilled person. Also polymers having modifications, chemically and/or physically, may be used such as for instance sulfonated polymers. Also mixtures of two or more polymers may be used.

The term "particulate material" as used herein is intended to encompass functionalized or active particles having regular (e.g. spherical) or irregular shapes, as well as shards, fibres and powders, including metal powders, plastic powders for instance powdered polystyrene, normal phase silica, fumed silica and activated carbon. Particles with an average particle size (diameter) up to 100 µm may be used. It is preferred that the average particle size is less than 50 µm, and is preferably in the range of 1 to 35 µm, preferably smaller than 20 µm.

With "functionalized or active particles" it is understood particles having catalytic and/or (selectively) adsorptive properties, i.e. affinity for or interaction with specific molecules, in particular for macromolecules such as peptides, proteins, nucleic acids or other biological compounds. Most suitable particles will have, in combination with the porous matrix morphology, rapid adsorption kinetics, a capacity and selectivity commensurate with the application and allow for desorption of the molecule with an appropriate agent. The affinity of suitable adsorptive particles for specific molecules can be defined in terms of hydrophobic, hydrophilic or charged functionalities, in particular ion exchange functionalities, molecular (imprinted) recognition, epitope recognition, isomer selective or other specific interactions. The term "functionalized or active particles" is also understood to comprise biological cells or organisms, either genetically modified or unmodified, in which a macromolecular functionality is present. Some or all of these cells or organisms may die upon fibre preparation, as long as the macromolecular functionality remains. It is preferred that these cells or organisms, or at least a large part thereof, keep their ability to adsorb or convert substances after the fibre preparation.

In further embodiments the particulate material is functionalized for size exclusion or for the separation of optically active compounds or the separation of isomers or can be used in reversed phase chromatography. Separation of optically active compounds or the separation of isomers may be based on selective affinity.

In another embodiment the particles are functionalised in order to serve as a component in a reaction mixture to promote reactivity in particular as catalyst. Also it may be desirable to combine adsorption and catalysis. In particular the catalyst may be a biocatalyst.

Suitable adsorptive particles will be apparent to those skilled in the art and include cation exchange resins, anion exchange resins, crosslinked polyvinylpyrrolidone particles (PVPP), silica type particles, for instance unmodified or derivatised with C₂, C₄, C₆, C₈ or C₁₈ or ion exchange functionalities, zeolites, ceramic particles, such as TiO₂, Al₂O₃, and the like, magnetic colloidal particles, porous or non-porous polymeric particles, such as porous polystyrene or styrene-divinylbenzene type particles either unmodified or derivatised with for instance sulfonic acids, quaternary amines and the like, molecular imprinted particles and (homogeneous) catalyst particles.

In a further embodiment the particulate material may be altered in its function by a subsequent functionalization after the fibre preparation. Ion-exchange particles may for example adsorb a protein which remains on the particle by a subsequent crosslinking reaction. The protein modified ion-exchange (IEX) particle now has a function different from its original adsorption function. Another example is for instance the immobilization of a (homogeneous) catalyst on the functional particle inside the porous matrix.

Where the fibre is to be applied as a means for detoxification or purification by removing toxic or undesired (small) organic compounds, absorptive particulate material may be used such as for instance activated carbon.

Typically the size of the pores in the first porous layer is not greater than 20µm, preferably less than 5 µm. Although the pore size is dependent on the application it should not be larger than the particle size to avoid particle loss during processing.

The second porous layer comprises the same or another polymer than the polymeric matrix of the first porous layer. Again, the invention is not limited to certain polymeric materials and other suitable materials may be apparent to the skilled person. The main function of this polymeric layer is to provide mechanical strength to the fibre. Secondly, it is preferred that the layer is permeable to the compounds or species of interest, especially in the case the layer is chosen to be the outer layer of the fibre, in order to maintain access to the functionalized particulate material in the first porous layer. In one embodiment, when the second layer is chosen to be the inner layer of the fibre, the porosity of the second layer is less important and the layer providing mechanical strength may even be non-porous. In another embodiment the second porous layer also comprises functionalized or active particles entrapped in a polymeric matrix, thereby yielding a porous fibre having different functionalities in one or different polymeric matrices or functionalized particulate material in different polymeric matrices.

As mentioned before, where the second porous layer is chosen to be the outer layer, it can be advantageous to choose the type of polymer to give favorable features to the fibre. In general it is advantageous to use polymers that are compatible with components found in food products. Preferably such polymers demonstrate a low interaction with food components, this to prevent non-selective interactions, with components out of the feed stream. More preferably the polymer of the second porous layer is chosen to be biocompatible, in particularly bloodcompatible. Polyurethane or copolymers of polycarbonate and polyurethane, or polylactic acid are for example suitable for this purpose. In another embodiment the polymer prevents non-specific interaction of biopolymers such as plasma proteins and nucleic acids with the surface of the fibre.

The pore size of the second porous layer is an adjustable parameter in fibre preparation. In one aspect of the invention the average pore size of the second porous layer can be chosen to be smaller than that of the first porous layer to work as a sieve. Preferably the average pore size of the second porous layer is less than 75 %, even more preferably less than 50 % of the average pore size of the first porous layer. The average pore size can be determined by microscopy techniques (like SEM, ESEM). Such barrier or sieving properties of the second porous layer prevent unwanted compounds or species to come in contact with the functionalized particulate matter of the fibre. Compounds or species can be undesired inside the fibre because of their size (blocking) or their affinity for the functionalized particles, either way reducing the functionalization capacity of the fibre. In one embodiment of the invention it is preferred that the average pore size of the second porous layer is smaller than the size of red blood cells, typically around 7 µm, preferably less than 5 µm. In another embodiment the average pore size of the second porous layer is larger than the size of the pores of the first porous layer.

The invention also encompasses porous fibres comprising a third porous layer, wherein the second and third porous layers sandwich the first porous layer. This third porous layer comprises a polymeric material that can be the same or different from the other layers. Like the second porous layer the third porous layer may provide mechanical strength and improve the compatibility of the fibre with its environment. In one embodiment the third layer comprises particulate material like the first porous layer, thereby providing a fibre having more functionalities entrapped therein.

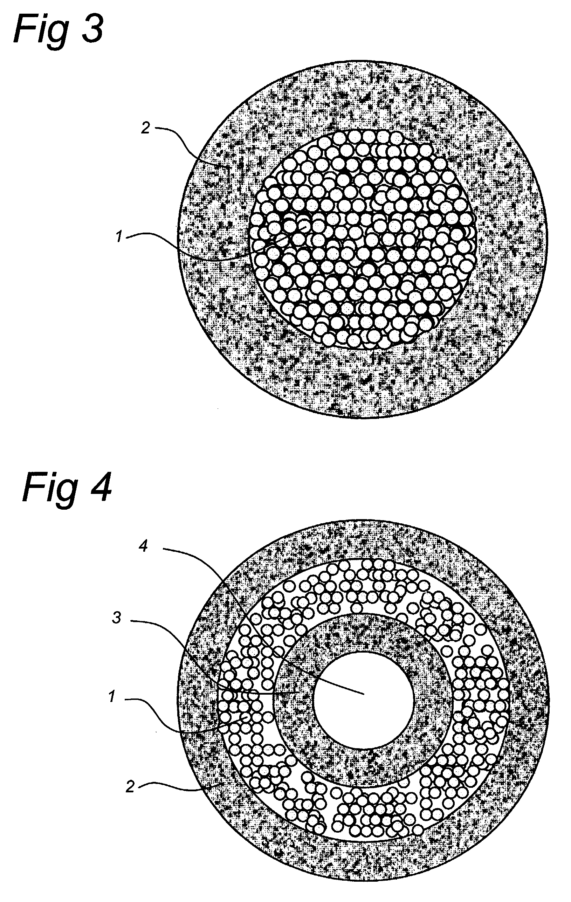

The term "fibre" used herein includes hollow and solid fibres. Depending on the type of application a suitable form of the fibre, either having a hollow or solid core, is selected. For instance a hollow fibre module can be prepared, where the feed stream is forced to flow from the fibre inside to the outside of the fibre, or vice versa, through a porous polymer layer, followed by a porous layer comprising particulate material and again through a porous polymer layer (figure 4). Such a flow through the layers of the fibre causes a pressure drop. This pressure drop is dependent on the thickness and the porosity of the particulate layer when small particulate size is used, especially when in relatively high concentrations, in particular at 100 %. For reasons of improved mechanical stability and optimized functional capacity of the fibre (particle loading close to or even maximum, i.e. 100 wt%) it can be preferred to sandwich the first porous layer between two polymeric layers. A hollow fibre comprising only the first and the second porous layer, in any order, is also within the scope of the invention.

Typical fibre diameters are between 10 µm and 3 mm, preferably at least 50 µm, whereas in most cases it is beneficial to use fibres with diameters between 0.1 and 2 mm, preferably at least 0.5 mm. If the first porous layer comprising particulate material forms the inner layer, it is preferred to have a layer thickness of less than 0.5 mm.

It is further an object of the invention to provide a process for preparing such a fibre, involving a coextrusion step and a phase inversion step.

With "coextrusion" it is understood the simultaneous extrusion of separate materials using a spinning head with multiple openings.

With "phase inversion" it is understood phase separation, which can be induced by: the change of temperature of the homogeneous solution (thermal phase separation), the evaporation of solvent from a polymer solution that contains a non volatile non-solvent (evaporation induced phase separation), the penetration of a non-solvent vapor (vapor induced phase separation), or immersion of the homogeneous polymer solution in a non-solvent bath (immersion induced phase separation). The latter is preferred in the method of the invention.

In the method of the invention it is preferred to use a two-step phase inversion process as described on page 11 lines 2 - 20 of WO-A-2004/003268. In summary, prior to entering a coagulation bath the exterior of the nascent fibre is in contact with a chosen medium, resulting in a change in composition of the exterior of the layer. This is considered as the first step of the phase separation process. When the fibre enters the coagulation bath the nascent fibre will further phase separate and the structure will be arrested. This is considered as the second step of the phase separation.

Using a triple layer spinneret as described in WO-A-93/12868 in the first step a stream of liquid, vapor, gas or vapor/gas mixture can be fed through the third, outermost outlet opening to allow for control of the pore size of the outer porous layer. However, it is considered to be within the scope of the invention to provide a method for the preparation of a hollow fibre in which the pore size of the inner wall is controlled. In that case, the stream of liquid, vapor or gas is being fed through the innermost outlet opening of the spinning head instead.

A simple tube-in-orifice spinneret can also be used in the method of the invention, but offers less flexibility in altering the porosity of the fibre surface as there is no outlet opening left to control the porosity of the outer layer in a first coagulation step. Alternatively to using a triple layer spinneret to control the outer surface porosity the nascent fibre can be spun through a "chimney" or closed box in which the atmosphere is controlled by a continuous flow of a vapor, gas or vapor/gas mixture. When a hot coagulation bath is used the vapor evaporating from the coagulation bath can be used as well to influence the outer layer pore structure.

In the coextrusion step a stream (A) containing particulate material and a stream (B) of polymeric material in a solvent for the polymeric material are being fed separately and simultaneously through two adjacent spinning head outlet openings. Stream (A) and stream (B) will ultimately result in the first and second porous layer of the fibre, respectively.

It is preferred that stream (A) is a mixture comprising 0 - 50 wt% of a polymeric matrix, based on the total weight of stream (A). The suitable amount of particles depends on the type of polymer and the concentration of the polymer that is used. In general the amount of particles may vary between 1 and 95% by weight. Thus stream (A) comprises 0% to 50% by weight polymeric material and 1% to 100% by weight of particulate material, the remainder being solvent, the weight being based on the total weight of stream (A). More preferably stream (A) comprises 0.5 wt% to 50 wt% of polymeric material and 1 wt% to 95 wt% of particulate material. It is thus possible to prepare a fibre comprising 100 wt% functionalized particulate matter entrapped within a second porous shell layer in a single preparation step and choosing thin fibre dimensions, preferably having an inner diameter of less than 0.5 mm.

More preferably stream (A) comprises 3 - 50 wt% and most preferably 5 - 20 wt% of polymeric material. Preferably the matrix polymer concentration is less than 12%, more preferably less than 10% by weight. The amount of particles in stream (A) is more preferably between 1 and 97 wt%, typically more than 30 wt%, even more preferably more than 40 wt%, and most preferably 50 - 90 % by weight of stream (A), based on its dry weight. The preferred concentrations depend on the specific polymer(s) and particulate matter that are used and the desired amount of particles in the first porous layer of the fibre that is to be obtained.

Stream (B) comprises 3 to 50 wt%, preferably 5 - 25 wt% of polymeric material. In one embodiment stream (B) is further supplied with 1 to 95 wt% of funtionalized particulate material in accordance with stream (A), to obtain a porous fibre having two adjacent layers of particulate material entrapped in polymeric matrices, wherein the particulate material and/or the polymeric matrices of both layers can be different. For both stream (A) and stream (B) applies that the polymeric material should be dissolved in a suitable solvent. Therefore, the type of solvent depends on the choice of the polymer. In view of the phase inversion process preferably solvents are used that are well miscible with water. One or more solvents can be used together even in combination with non-solvents. Suitable solvents include, but are not limited to N-methyl-pyrrolidone (NMP), dimethyl acetamide (DMAc), dimethylformamide (DMF), dimethylsulfoxide (DMSO), formamide (FA), tetrahydrofurane (THF), ε-caprolactam, butyrolactone, in particular 4-butyrolactone, sulfolane, cyclohexanone and triethylphosphate. Preferred solvents are NMP, DMAc, DMF, DMSO, THF, ε-caprolactam and 4-butyrolactone. As the choice of polymer(s) in stream (A) and stream (B) is taken independently of each other, the solvents can also differ.

Mixtures of solvents and non-solvents as well as additive components of any nature may be applied in the coagulation bath to influence the morphological structure of either layer. Additives may be applied to stream (A) and/or stream (B), such as for instance to influence the viscosity, as pore former, as pore connectivity enhancer, to reduce or prevent macro-void formation and/or to introduce hydrophilicity. Possible additives include, but are not limited to polyvinylpyrrolidone (PVP), polyethylene glycol (PEG), polyethyleneoxide (PEO), dextran, glycerol, diethylene glycol, (higher) alcohols such as octanol, carboxylic acids or organic acids, such as oxalic acid, maleic acid, tartaric acid, fumaric acid, salts, such as LiCl and CaCl₂. It is within the competence of the skilled person to assess and apply suitable (mixtures) of (non-)solvents, additives and process conditions to produce a fibre with desired properties. Additives and/or non-solvent can partly replace the solvent and can vary between 0.01 and 50% by weight.

If a fibre is to be obtained in which the first porous layer with particulate material entrapped therein forms the inner layer, then stream (A) is to be fed through the spinning head on the inside of stream (B), and vice versa for those embodiments in which the second porous layer is the outer layer of the fibre.

For those embodiments in which a hollow core and/or a third or even more layers are required, it will be obvious for a skilled person to adapt the spinning head to comprise the required number of outlet openings and to chose the order in which streams need to be submitted to these openings. To achieve a hollow core it is for instance known in the art to apply a stream (C) of bore liquid through the innermost opening, the needle. Where the fibre is required to withhold a third polymeric layer, this layer is formed from a stream (D) for which the same conditions and restraints apply as for stream (B). For those cases in the coextrusion step the stream (D) of polymeric material in a solvent for the polymeric material is coextruded with stream (A) and stream (B), wherein the outlet opening through which stream (A) is being fed is sandwiched between the outlet openings through which streams (B) and (D) are being fed, after which the three streams are subjected to phase inversion.

As mentioned above, the phase inversion step preferably involves a coagulation medium. Water is the preferred coagulation medium. Other examples of possible coagulation media and non-solvents are methanol, ethanol, propanol, butanol, ethylene glycol, aceton, methyl ethyl ketone.

In order to obtain the desired porosity in the fibres mixtures of non-solvents and solvents in combination with variation in physical process parameters like temperature, production rate, humidity, air gap length, stretching and take up speed are used.

As aforementioned the porosity of the fibre wall is mainly controlled in the first step through the flow of a stream of liquid, vapor or gas through the outlet opening adjacent to the stream ultimately forming the shell layer of the fibre. The choice of the composition of this flow and the contact time prior to entering the coagulation bath determine whether the shell layer becomes dense or porous. When the stream ultimately forming the shell layer is in contact with air of moderate humidity the surface of the outer layer turns out dense. To profit of optimal accessibility of the entrapped particles a suitable medium should be flown along the stream ultimately forming the shell layer during spinning. Preferably the medium is a liquid mixture of solvent and non-solvent for the polymer. Preferably the non-solvent is water.

Alternatively it is possible to apply a gas stream comprising a non-solvent for the polymer. However, if a vapor is used, it is provided that the stream ultimately forming the shell layer of the fibre contains a non-volatile solvent, as a result of which the discharge of solvent into the vapor path is small compared with the diffusion inwards of the vapor of the non-solvent. A mixture of vapors of two non-solvents or a solvent and a non-solvent can also be used to influence fibre formation. In the case of a gas or vapor stream preferably the non-solvent is water vapor. A skilled person can easily determine the desired amount of water vapor in the gas stream to produce a first phase inversion effect.

The porosity of the first porous layer can be controlled by varying the concentration of polymeric material, the amount and types of additives, and the size, content and functionality of the particulate material as is explained in more detail on page 10 lines 4 - 26 of WO-A-2004/003268, herein incorporated by reference. Varying functionality means varying chemical groups in or on or of a particle.

The thus produced porous fibre may undergo post treatment such as for instance a heat treatment, a chemical treatment (e.g. oxidation or degradation of specific additives followed by washing) a stretching or a further functionalization step to activate the particles, to fix the porous structure of the fibre or to reduce or increase the size of the pores of the porous fibre. Depending on polymer and particles used, the skilled person will be able to determine a suitable temperature or temperature range to apply in the heat treatment.

The fibres prepared according to the method of the invention can be used as such, however, in another embodiment of the invention the fibres are comprised in a module. Suitably such a module comprises spirally wound fibre mats packed inside a housing, a bundle of fibres packed longitudinally inside a housing, transverse flow fibre configuration inside a housing, fibres wounded as a spool in parallel or cross-over mode inside a housing or any other orderly or disorderly fibre packing configuration inside a housing. Also other bodies comprising fibres, optionally in a finely divided form, prepared according to the method of the invention are within the scope of the invention. Such bodies include for instance columns for chromatography.

The porous fibres and modules of porous fibres of the invention have a wide variety of applications, depending on the particle selection, and the porosity and choice of the second porous layer composition. They may be used for (selective) adsorption, conversion, isolation and/or purification of compounds from a mixture of compounds, in particular from a fermentation broth, tissue broth, plant broth, cell broth, dairy or blood, or for the immobilisation of a catalyst in a reaction mixture. Herein, the possibilities of the second porous layer to sieve and pre-select those compounds of interest to receive access to the functionalized particles or to promote the compatibility of the fibre with its environment, in particular a biological environment, can conveniently be applied. For example, applications include peptide and protein isolation, immobilized ligands for affinity based separations, chromatography, immobilized catalysts and enzymes for reactions, release and product protection etc. Those skilled in the art will be able to choose the appropriate particles and particle functionalization in combination with appropriate polymeric material and optionally additives depending upon the desired application. A particular use of interest is the isolation of desired proteins, including monoclonal antibodies from fermentation broths, tissue broths, plant broths or cell broths in general, catalytic and enzymatic reactions, detoxification, product protection and release systems.

### EXAMPLE 1

A homogeneous polymer solution 1 with the following composition was prepared by mixing 9.5 wt% polyethersulfon (Ultrason E 6020 P), 24 wt% polyethylene glycol 400, 4.5 wt% PVP, 6.8 wt% dry Sepharose FF (34 µm), 6 wt% water and 49.2 wt% N-Methyl Pyrrolidone (NMP). In addition, a homogeneous polymer solution 2 with the following composition was prepared by mixing 16 wt% polyethersulfon (Ultrason E 6020 P), 38.75 wt% polyethylene glycol 400, 38.75 wt% N-Methyl Pyrrolidone and 6.5 wt% water.

Both solutions were extruded simultaneously through a tube-in-orifice spinneret with the following dimensions: ID tube = 0.4 mm, OD tube = 0.6 mm, ID mm orifice = 1.2 mm. Solution 1 was extruded at a flow rate of 5.1 ml/min through the tube of the spinneret and solution 2 was extruded at a flow rate of 0.51 ml/min through the orifice of the spinneret. After passing an air gap of 45 mm the double layer nascent fibre entered a water bath where phase separation took place. All solutions were kept at room temperature.

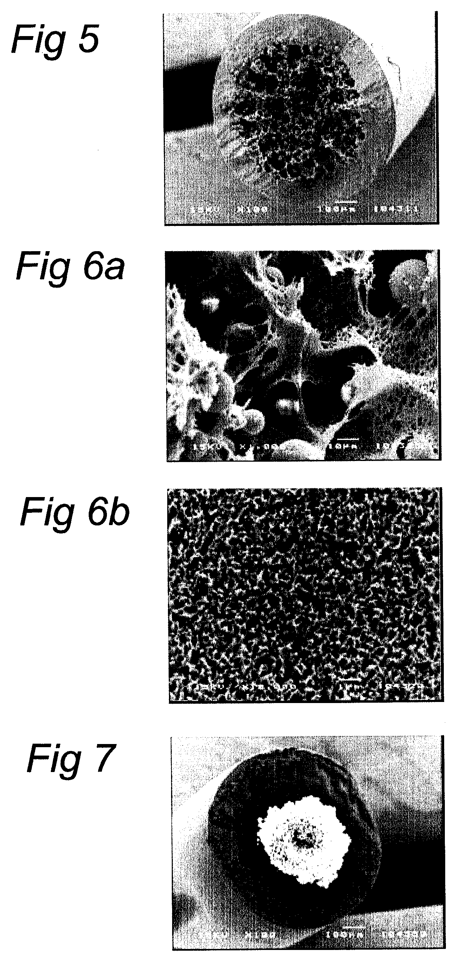

The cross section of the resulting fibre is presented in figure 5. A higher magnification of the core layer (layer 1) of the fibre clearly shows an extremely open structure with the Sepharose particles entrapped, see figure 6A. A higher magnification of the outer layer (layer 2) clearly shows that this layer is also porous and does not contain any Sepharose particles, see figure 6B. From these pictures it can already be seen that layer 2 has a significantly denser structure than layer 1 and therefore gives the fibre an improved mechanical strength compared to a fibre that would only consist of layer 1. Layer 1 has a particle content of 40 wt%, based on the total dry weight of layer 1. In in the wet state its weight is approximately 83 wt% of the layer, due to the absorption of water by the particles.

### COMPARISON EXAMPLE I

The fibre prepared according to example 1 was compared to a fibre consisting only of layer 1 with a comparable amount of particles. Thereto, solution 1 according to example 1 was extruded at RT through the tube of a tube-in-orifice spinneret with the following dimensions: ID tube = 0.4 mm, OD tube = 0.6 mm, ID mm orifice = 1.2 mm. The extrusion rate was 1.75 ml/min. After passing an air gap of 25 mm the nascant fibre entered a water bath at RT where phase separation took place.

The thus obtained fibre was compared to a fibre according to the invention in terms of mechanical stability as measured on a tensile testing machine (type Zwick Z020). The distance between the clamps (LE position) was 15 mm and the modulus speed was 10 mm/min. The pre-load was 0.1 cN and pre-load speed was 10 mm/min. The fibre consisting of only layer 1 has in a dry state a tensile stress at break of 1.3 ± 0.2 MPa and an elongation at break of 13.9 ± 0.8 %; in the wet state (20 wt% ethanol solution) the tensile stress at break is 1.05 MPa and the elongation at break is 19.4 ± 1.1 %. The fibre consisting of the double layer (as shown in figure 5) has in a dry state a tensile stress at break of 1.9 ± 0.2 MPa and an elongation at break of 28.9 ± 0.3 %; in the wet state (20 wt% ethanol solution) the tensile stress at break is 1.41 ± 0.05 MPa and the elongation at break is 45.8 ± 4.7 %.

### EXAMPLE 2

The same solutions as defined in example 1 were extruded simultaneously through a tube-in-orifice spinneret with the following dimensions: ID tube = 0.4 mm, OD tube = 0.6, ID mm orifice = 1.2 mm. Solution 2 was extruded with a flow rate of 5.1 ml/min through the tube of the spinneret and solution 1 was extruded at a flow rate of 0.51 ml/min through the orifice of the spinneret. After passing an air gap of 45 mm the double layer nascent fibre entered a water bath where phase separation took place.

This resulted in a double layer fibre with the core layer being layer 2 (no Sepharose particles) and the outer layer being layer 1 (with 40 wt % Sepharose particles based on the total weight of layer 1).

### EXAMPLE 3

A homogeneous polymer solution 3 with the following composition was prepared: 15 wt% Bionate® 80A (polycarbonate based polyurethane from The Polymer Technology Group Inc.), 2 wt% PVP K90 and 83 wt% N-Methyl Pyrrolidone (NMP).

Solution 1 from example 1 and solution 3 were extruded simultaneously through a tube-in-orifice spinneret with the following dimensions: ID tube = 0.4 mm, OD tube = 0.6 mm, ID mm orifice = 1.2 mm. Solution 1 was extruded with a flow rate of 5.1 ml/min through the tube of the spinneret and solution 3 was extruded at a flow rate of 0.51 ml/min through the orifice of the spinneret. After passing an air gap of 45 mm the double layer nascent fibre entered a water bath where phase separation took place. All solutions were at room temperature.

This resulted in a double layer fibre similar to the one presented in figure 5 (prepared according to example 1) with a highly porous core layer (layer 1) containing Sepharose particles entrapped and a layer 2 at the outer side of the fibre, the obtained fibre being porous and biocompatible.

### EXAMPLE 4

Solution 4 was prepared by mixing the following ingredients: 1 g dry Sepharose FF (34 µm), 2.3 g water and 9.2 g NMP.

Solution 2 of example 1 and solution 4 were extruded simultaneously through a tube-in-orifice spinneret with the following dimensions: ID tube = 0.4 mm, OD tube = 0.6 mm, ID mm orifice = 1.2 mm. Solution 4 was extruded at a flow rate of 5.1 ml/min through the tube of the spinneret and solution 2 was extruded at a flow rate of 0.51 ml/min through the orifice of the spinneret. After passing an air gap of 65 mm the double layer nascent fibre entered a water bath where phase separation took place. All solutions were at room temperature. It resulted in a hollow fibre of porous polyethersulfone with a layer of pure particles entrapped in the core of the fibre, see figure 7.

## Claims

1. A fibre having a first porous layer and an adjacent second porous layer concentrically arranged therewith, said first porous layer comprising particulate material, said second porous layer comprising a polymeric material, and wherein the pores of the layers are at least permeable to fluid.

2. The fibre according to claim 1, wherein the fibre comprises a third porous layer, the second and third porous layers sandwiching the first porous layer, said third porous layer comprising a polymeric material.

3. The fibre according to claim 1 or 2, wherein the second porous layer is the outer layer, and wherein the first porous layer comprises 0 - 95 wt% of a polymeric matrix and 100 - 5 wt% of the particulate material entrapped therein, calculated on the total weight of the layer.

4. The fibre according to any one of the preceding claims, wherein the polymeric material of the second porous layer is biocompatible, preferably bloodcompatible.

5. The fibre according to any one of the preceding claims, wherein the average pore size of the second porous layer is smaller than that of the first porous layer.

6. The fibre according to any one of the preceding claims, wherein the average pore size of the second porous layer is smaller than the size of red blood cells.

7. The fibre according to claim 1, wherein the first porous layer is the outer layer, said first porous layer comprising 5 - 95 wt% of a polymeric matrix and 95 - 5 wt% of the particulate material entrapped therein, calculated on the total weight of the first porous layer.

8. The fibre according to any one of the preceding claims, wherein the fibre has a hollow core.

9. The fibre according to any one of the preceding claims, wherein the particulate material has catalytic and/or (selectively) adsorptive properties.

10. A method for the preparation of a fibre according to any one of the preceding claims, said method comprising a coextrusion step using a spinning head with at least two concentrically arranged outlet openings, wherein a stream (A) containing particulate material and a stream (B) of polymeric material in a solvent for the polymeric material are being fed separately and simultaneously through two adjacent outlet openings, after which the two streams are subjected to phase inversion, preferably wherein the two streams are subjected to a two-step phase inversion process, to obtain the fibre having porous layers.

11. The method according to claim 10, wherein the stream (A) is a mixture comprising 0 - 50 wt% of a polymeric matrix and 1 - 100 wt% of the particulate material.

12. The method according to claim 10 or 11, wherein the stream (B) comprises 3 to 50 wt% of polymeric material.

13. The method according to any one of claims 10 - 12, wherein the two-step phase inversion process involves using a triple layer spinneret in which a stream (C) of liquid, vapor or gas is being fed through the third, outermost outlet opening to allow for control of pore size of the outer porous layer.

14. The method according to any one of claims 10 - 13, wherein the stream (A) is fed through the spinning head on the inside of the stream (B).

15. The method according to any one of claims 10 - 14, wherein a stream (D) of polymeric material in a solvent for the polymeric material is coextruded, wherein the outlet opening through which stream (A) is being fed is sandwiched between the outlet openings through which streams (B) and (D) are being fed, after which the three streams are subjected to phase inversion, to obtain the fibre having three porous layers.

16. The method according to any one of claims 10 - 15, wherein the step of phase inversion is followed by a heat treatment, a chemical treatment, a stretching or a further functionalization step to activate the particles, to fix the porous structure of the fibre or to reduce the size of the pores of the porous fibre.

17. The use of the fibre according to any one of the claims 1 - 9 for (selective) adsorption, conversion, isolation or purification of compounds from a mixture of compounds, in particular from a fermentation broth, tissue broth, plant broth, cell broth, dairy or blood.

18. A module comprising fibres according to any one of claims 1 - 9, said module comprising a spirally wound fibre mat packed inside a housing, a bundle of fibres packed longitudinally inside a housing, a transverse flow fibre configuration inside a housing, fibre wounded as a spool in parallel or cross-over mode inside a housing or any other orderly or disorderly fibre packing configuration inside a housing.

19. Use of a fibre according to any one of claims 1 - 9 or a module according to claim 18 for the (selective) adsorption, conversion, isolation and/or purification of compounds from a mixture of compounds, in particular from a fermentation broth, tissue broth, plant both, cell broth, dairy or blood.

20. Use of a fibre according to any one of claims 1 - 9 or a module according to claim 18 for the immobilisation of a catalyst in a reaction mixture.
